# EUROPÄISCHE PATENTSCHRIFT

(11) **EP 1 566 350 B1**
(45) Veröffentlichungstag und Bekanntmachung des Hinweises auf die Patenterteilung: **11.04.2007**
(21) Anmeldenummer: 05003511.2
(22) Anmeldetag: 18.02.2005
(51) Int. Cl.: B65G 13/07

(54) **Transportbahn mit einer Antriebsrolle**
Roller way with driving rollers
Convoyeur à rouleaux avec rouleaux d'entrainement

(30) Priorität: 23.02.2004 DE 102004009058
(43) Veröffentlichungstag der Anmeldung: 24.08.2005
(73) Patentinhaber: Grob-Werke GmbH & Co. KG, 87719 Mindelheim (DE)
(72) Erfinder: Vogl, Peter, 86825 Bad Wörishofen (DE); Lochbrunner, Johann, 89233 Neu-Ulm (DE)
(74) Vertreter: Pfister, Stefan Helmut Ulrich

(56) Entgegenhaltungen:
- EP-A- 0 014 666
- NL-A- 8 000 801
- US-A- 4 421 224
- US-B1- 6 502 690

## Beschreibung

Die Erfindung betrifft eine Transportbahn, insbesondere Friktionsrollenbahn mit wenigstens einer das Gut antreibenden Antriebsrolle, die von einer Antriebswelle angetrieben wird, wobei die Antriebswelle einen Kettentrieb aufweist.

Derartige Transportbahnen sind bekannt. Sie sind dadurch gekennzeichnet, dass die Antriebe für die Transportbahn jeweils über Antriebsrollen antreibende Antriebswellen mit Kettentrieben realisiert werden. Die für den Antrieb notwendige Bewegungsenergie wird in der Regel von einem Motor zur Verfügung gestellt. Die Transportbahn weist dabei wenigstens eine von einer Antriebswelle angetriebene Antriebsrolle auf, die zumindest einen Teil beziehungsweise eine Sektion der Transportbahn antreibt. Hierzu ist es bekannt, die Antriebswelle mit einem Kettentrieb anzutreiben. Dazu besitzt nach dem Stand der Technik die Antriebswelle ein Zahnrad, über das eine Kette die Transportbahn antreibt. Es ist auch bekannt, mehrere Antriebswellen gleichzeitig über eine Kette anzutreiben.

Das Problem bei dieser Art von Antrieben der Transportbahnen besteht darin, dass die Transportbahnen aufgrund von Bearbeitungszyklen zeitweilig blockiert werden, derart, dass Blockierungseinrichtungen in die Transportbahn eingeschwenkt werden, um das Transportgut zu blockieren. Dabei ergibt es sich, dass die Kette und das Zahnrad selbstverständlich stärker beansprucht werden als dies normalerweise üblich ist. Da die Antriebsketten eine nicht unbeträchtliche Länge aufweisen ergibt es sich weiter, dass, wenn beispielsweise mehrere Antriebswellen von einer Kette angetrieben werden, die Kette auch unterschiedlich beansprucht wird. Durch die Stoßbeziehungsweise Schlagbeanspruchung der Ketten verringert sich die Lebensdauer der Ketten beträchtlich.

So ist es beispielsweise notwendig, dass bei einer Dehnung der Kette von über 3 % die Kette gewechselt werden muß. Dies tritt in der Regel bei einer entsprechenden Auslastung nach mehreren Jahren ein. Oftmals ist die Lebensdauer der Kette der Transportbahn deutlich geringer wie die Lebensdauer der Fertigungsanlage, in welche die Transportbahn eingesetzt ist. Zwar ist es möglich, diese schleichende Längung der Kette durch die regelmäßige Herausnahme von Kettengliedern zu kompensieren, jedoch muss die Kette bei einer entsprechenden Reckung von mehr als 3% gewechselt werden, da dann das Zusammenspiel zwischen Kette und Zahnrad nicht mehr gewährleistet ist. Sowohl der Ausbau einzelner Kettenglieder wie auch der Wechsel der gesamten Kette ist bei entsprechenden sich über eine größere Länge erstreckenden Transportbahnen sehr aufwendig.

Um die Dehnung der Kette zu vermindern, bzw. den Austausch der Kette zu vereinfachten, werden zum Antrieb der Antriebsrollen nach der EP 0 014 666 A1 kurze Ketten verwendet, die jeweils zwei Antriebswellen miteinander verbinden. Zur Übertragung der Bewegung ist der erste Kranz des ersten Doppelzahnrades mit dem Antrieb und der zweite Kranz des ersten Doppelzahnrades mit einem der beiden Kränze des zweiten Doppelzahnrades (wechselseitige Änderung der Kette, das heißt, nur eine Kette für Übertragung) verbunden. Um die Schlagbeanspruchung der Kette zu verringern, ist zwischen Zahnrad und Antriebsrolle eine Rutschkupplung vorgesehen.

Ausgehend von diesem Stand der Technik hat es sich die Erfindung zur Aufgabe gestellt, eine Transportbahn zu entwickeln, die wartungsärmer ist.

Zur Lösung dieser Aufgabe schlägt die Erfindung eine Transportbahn, insbesondere Friktionsrollenbahn mit wenigstens einer das Gut antreibenden von einer Antriebswelle angetriebenen Antriebsrolle und einem die Antriebswelle antreibenden Kettentrieb vor, welche sich dadurch auszeichnet, dass die die Antriebsrolle antreibende Antriebswelle zwei voneinander unabhängig drehbare Zahnräder trägt, die mit wenigstens einer Antriebskette und einem die Antriebskette antreibenden Antrieb zusammenwirken. Durch diese Ausführung ist es gegeben, dass Kettenlast auf 50 % pro Kette reduziert wird, wenn man davon ausgeht, dass jedes Zahnrad eine separate Kette trägt bzw. jedem Zahnrad eine eigene Antriebskette zugeordnet ist. Dies ist beispielsweise entsprechend einer vorteilhaften Weiterbildung der Erfindung vorgesehen.

In gleicher Weise ist es natürlich auch vorgesehen, dass die Antriebskette als Doppelglied-Kette ausgebildet ist. Durch die zwei getrennt wirkenden Zahnräder, die mit der Antriebskette und dem Antrieb zusammenwirken ist es jetzt gegeben, dass bei dem Transport die Last insgesamt auf zwei Ketten verteilt wird und durch die Zuordnung von zwei Ketten auf zwei Zahnrädern oder von einer Doppelglied-Kette auf diesen beiden Zahnrädern eine optimale Verteilung der Last erfolgen kann. Solche Doppelglied-Ketten sind als Duplex-Ketten bekannt, sie bestehen aus zwei nebeneinander angeordneten Kettengliedern mit einem gemeinsamen Mittelstück. Durch die erfindungsgemäße Lösung wird jetzt eine beträchtliche Erhöhung der Lebensdauer erreicht. Der wartungsaufwand wird um ein erhebliches Maß gesenkt, weil das komplizierte Austauschen der Ketten eines Kettentriebes zumindest in der an Transportbahnen vorgesehenen Länge eine nicht unerhebliche Arbeitszeit in Anspruch nimmt.

Die Erfindung zeichnet sich entsprechend einer Weiterbildung auch dadurch aus, dass die Antriebswelle wenigstens eine Feder aufweist, deren Federkraft die Zahnräder gegen eine an der Welle ausgebildete Kupplung drückt. Dabei ist es weiterhin von Vorteil, wenn die Zahnräder auf der Antriebswelle drehbar angeordnet sind.

Besonders günstig ist es dabei, wenn beide Zahnräder unabhängig voneinander drehbar auf der Antriebswelle angeordnet sind. Diese Merkmale zusammen, wie zuvor beschrieben, bewirken, dass die Zahnräder mit der Kupplungsscheibe der Kupplung und der Feder zusammen dafür sorgen, dass anfallende Schläge durch Blockierungen jetzt besser abgefangen werden können. Die zuletzt beschriebenen Varianten der Erfindung sorgen dafür, dass insgesamt vier Reibflächen zur Übertragung der Antriebskraft zur Verfügung stehen. Dadurch ist es jetzt möglich, die Federkraft der Andrucksfeder zu reduzieren. Beispielsweise gelingt es jetzt die Federkraft zu halbieren und trotzdem das gleiche Antriebsmoment zu übertragen. Dadurch, dass insgesamt vier Reibflächen erfindungsgemäß zur Verfügung stehen, erreicht man auch eine höhere Sicherheit der Antriebsmomentübertragung, weil es nicht wahrscheinlich ist, dass alle vier Reibflächen gleichzeitig verschmutzen. Bei Verschmutzung von nur einer Reibfläche ist es durchaus möglich, die Transportbahn weiterzubetreiben. Es ist selbstverständlich auch gegeben, dass bei einer nur geringen Verschmutzung durch die Reibung beziehungsweise das Drehen der Reibflächen aufeinander dann die Verschmutzung wieder beseitigt wird, so dass eine Art Selbstreinigung stattfindet. Insofern bietet die Erfindung eine Reihe von vorteilhaften Möglichkeiten, die es ermöglicht, die Anlage wesentlich weniger störanfällig betreiben zu können und die Wartungszyklen zu verlängern.

Entsprechend einer vorteilhaften Weiterbildung ist ein Zwischenring vorgesehen, der zwischen den beiden Zahnrädern auf der Antriebswelle angeordnet ist. Dieser Zwischenring ist ebenso wie die Zahnräder auf der Antriebswelle drehbar gelagert und wird durch die Kraft der Feder ebenfalls an die Zahnräder gepreßt. Der Zwischenring ist dabei gegenüber beiden Zahnrädern verdrehbar.

Von Vorteil ist es auch, wenn eine Andruckhülse vorgesehen ist, die die Kraft der Feder auf die Zahnräder und die Kupplung überträgt. Diese Andruckhülse ist auf der zur Feder weisenden Seite von Vorteil, da dadurch die Federkraft wesentlich besser und gleichmäßiger, zumindest auf das erste Zahnrad aus Federrichtung gesehen übertragbar ist. Die Andruckhülse ist dabei ebenfalls in Art einer Scheibe mit einem Ansatz zur Aufnahme der Feder ausgebildet, so dass die Kraftübertragung parallel und äußerst gleichmäßig beziehungsweise gleichförmig auf die Zahnräder und die Kupplung erfolgt. Sie ist dazu selbstverständlich beweglich auf der Antriebswelle angeordnet.

Ein weiterer Aspekt der Erfindung ist dadurch angegeben, daß eine Verstelleinrichtung vorgesehen ist, mittels derer die Friktions- bzw. Reibungskraft, die durch die Kupplung übertragen werden soll, veränderbar bzw. einstellbar ist. Mittels einer Verstelleinrichtung, die bevorzugt ebenfalls auf der Welle bzw. auf der über der Welle in Art einer Hülse ausgebildeten Kupplung angeordnet ist, läßt sich die Kraft der Feder, welche die Kupplung bzw. die Andruckhülse gegen die Zahnräder drückt, in einfacher Weise verändern. Selbstverständlich sind auch andere Verstelleinrichtungen von der Erfindung umfaßt. Die Verstelleinrichtung ist auf eine Erhöhung bzw. Reduzierung der Kraft der Feder nicht beschränkt. Gleichwohl lässt sich durch eine Verstelleinrichtung die Friktionskraft sowohl erhöhen, als auch verringern. Beispielsweise ist es bei einem Verschleiß der Reibflächen und damit nicht mehr ausreichender Kraftübertragung möglich, die Antriebkraft zu erhöhen. Bei Veränderung des zu transportierenden Transportgutes kann es aber auch erforderlich sein, die Reibungskraft zu verringern, um ein Blockieren der Antriebsrollen der Rollenbahn selbst zu verhindern. Insofern sind beide Varianten der Kraftveränderung von der Erfindung umfaßt.

Die Kupplung ist vorzugsweise als Kupplungsscheibe ausgebildet, um die Reibungskräfte optimal aufnehmen zu können. Sie ist dabei jedoch so dimensioniert, dass für den Fall des Blockierens der Transportbahn ein Rutschen gewährleistet ist, um den Antrieb nicht zu beschädigen und ein kontinuierliches Weiterlaufen des Antriebes zu gewährleisten. In diesem Fall handelt es sich dann um eine Rutschkupplung.

Für den Fall, dass höhere Antriebsmomente übertragen werden müssen, ist es vorgesehen, dass die Kupplung an der zum Zahnrad weisenden Seite mit einer reibungserhöhenden Beschichtung versehen ist.

Selbstverständlich ist es auch möglich wenigstens eines der Zahnräder an der zur Kupplung und/oder zum jeweils anderen Zahnrad weisenden Seite mit einer reibungserhöhenden Beschichtung zu versehen.

Eine Weiterbildung der zuvor beschriebenen Varianten sieht vor, dass alle zueinandergerichteten Flächen der Zahnräder der Andruckhülse, des Zwischenrings und der Kupplung mit reibungserhöhenden Beschichtungen versehen sind. Dies wird jeweils in dem Maße vorgenommen, wie dies nach den Einsatzzwecken der jeweiligen Transportbahn erforderlich ist. Dies richtet sich selbstverständlich in hohem Maße nach den jeweils zu transportierenden Gütern.

Die Feder ist gemäß einer Weiterbildung der Erfindung in einem Federlager gelagert, welches vorzugsweise an der von der Kupplung abgewandten Seite der Antriebswelle angeordnet ist.

Die Feder für die Kupplung kann entsprechend einer vorteilhaften Weiterbildung als eine auf Druck beanspruchbare Feder ausgebildet sein.

Es ist aber ebenso erfindungsgemäß vorgesehen, eine auf Zug beanspruchbare Feder als Kupplungselement auszubilden. Dazu sind gegebenenfalls nur die jeweiligen Führungs- und Befestigungselemente entsprechend umzustellen.

Die Federkraft kann auch durch Verstellen der Position des Federlagers verändert werden. Dies kann mit mechanischen Verstelleinrichtungen ebenso erreicht werden, wie mit motorisch angetriebenen. In diesem Fall wirkt dann das Federlager als Verstelleinrichtung für die Veränderung der Friktionskraft.

Die Verstelleinrichtung ist entsprechend einer Variante der Erfindung als Hülse ausgebildet, die auf ein an der Kupplung vorgesehenes Gewinde zur Veränderung der Friktion aufschraubbar ist. Aufgrund der Verstellbarkeit der Hülse auf der Kupplung ist es möglich, die Andruckkraft der Feder zu verändern, wodurch eine Veränderung der Friktion beziehungsweise Reibkraft für die Kupplung und gegebenenfalls den oder die Zwischenringe erreichbar ist. Die Veränderung der Friktion erfolgt dabei durch Veränderung der Stellung der Hülse auf der Kupplung.

Zur Verstellung weist die Hülse bevorzugt außen einen Sechskant auf, der zum Verdrehen der Hülse und damit zur Veränderung der Vorspannung dient. Günstigerweise kann dieser Sechskant entweder mittels eines dafür passenden Schlüssels verstellt werden. Selbstverständlich ist es auch möglich, daß auf diesen Sechskant motorisch mittels entsprechender dazu korrespondierender Mittel eingegriffen wird.

Ein weiterer Aspekt der erfindungsgemäßen Lösung ist dadurch angegeben, daß zwischen der Hülse und der Kupplung eine Sicherungseinrichtung vorgesehen ist, mittels derer die einmal eingestellte Vorspannung festlegbar ist. Dazu ist es in einfacher Weise möglich, die Sicherungseinrichtung als Nut- und Federverbindung mit einer in die Nut eingreifenden Sicherungsfeder oder mit einem in die Nut eingreifenden Sicherungsbolzen auszubilden. Von Vorteil ist es dabei, wenn die Sicherungsfeder beziehungsweise der Sicherungsbolzen selbst federgelagert ist, derart, daß die Feder beziehungsweise der Bolzen bei korrespondierender Stellung dazu selbstständig in die Nut eingreift.

Die Antriebswelle ist gemäß einer Weiterbildung der Erfindung in Kugellagern beidseitig gelagert, die in einem Gehäuse angeordnet sind. In gleicher Weise ist es selbstverständlich auch möglich, die Antriebswelle einseitig oder mittig nur in einem Kugellager zu lagern. Die einseitige Lagerung ermöglicht eine sehr kompakte Bauweise des Gehäuses.

Das Gehäuse weist dabei, entsprechend einer vorteilhaften Weiterbildung, einen abnehmbaren Gehäusedeckel auf. Diese Ausführungsform ist besonders vorteilhaft, da sich das Gehäuse und der Gehäusedeckel beispielsweise aus extrudierten Aluminiumprofilen herstellen lassen. Die Gehäuse können dabei sowohl für den erfindungsgemäß vorgesehenen Anwendungszweck Einsatz finden als auch für andere in einem Gehäuse anordenbare Maschinenelemente eingesetzt werden. Die Gehäuseteile sind entsprechend einer Variante der Erfindung mit Clipsverbindungen untereinander verbunden. Eine der Clipsverbindungen kann dabei auch als eine Art Gelenk ausgebildet sein oder rund bzw. kugelförmig zur Erreichung einer Dreharbeit.

Die Erfindung zeichnet sich auch entsprechend einer Ausführungsform dadurch aus, daß die Anordnung der Elemente in der Reihenfolge Andruckhülse, Zahnrad, Antriebswelle erfolgt bzw. die Anordnung der Kraftübertragungselemente von dem der Antriebswelle abgewandten Seite in der Reihenfolge Befestigungselement, Federlager, Feder, Andruckhülse, Zahnrad, Zwischenring, Zahnrad und Kupplung vorgesehen ist. Diese Ausführungsform ist beispielsweise dann von Vorteil, wenn das Gehäuse nicht allzu kompakt vorgesehen ist und eine Lagerung der Welle beispielsweise mit zwei Kugellagern ermöglicht ist.

Die kompaktere Variante der Ausführungsform des Gehäuses ergibt sich insbesondere aus der entsprechend einer weiteren Variante der Erfindung vorgesehenen Anordnung der Kraftübertragungselemente, wonach die Anordnung der Elemente in der Reihenfolge Zahnrad, Andruckhülse, Antriebswelle vorgesehen ist bzw. von dem der Antriebswelle abgewandten Ende aus gesehen, in der Reihenfolge Kupplung, Zahnrad, Zwischenring, Zahnrad, Zwischenring, Andrückhülse, Feder und Hülse als Verstelleinrichtung angeordnet wird.

Die Transportbahn nach der Erfindung zeichnet sich auch dadurch aus, dass eine Antriebswelle für den Antrieb einer Sektion beziehungsweise eines Abschnittes der Transportbahn vorgesehen ist. Es ist selbstverständlich erfindungsgemäß auch möglich, alle Rollen über die entsprechenden Antriebswelle einer Friktionsrollenbahn beispielsweise anzutreiben.

Die Erfindung sieht auch vor, dass die Antriebskette mehrere Antriebswellen gleichzeitig antreibt. Dies reduziert den Aufwand für den Antrieb insgesamt weiter.

Ein Befestigungselement für das Federlager ist entsprechend einer Variante der Erfindung auf der Antriebswelle vorgesehen. Dabei ist es von Vorteil, wenn dieses Befestigungselement beispielsweise als Spannring oder dergleichen ausgebildet ist.

Dieser Spannring kann gleichzeitig zur Veränderung des Andruckmomentes der Feder und damit als Verstelleinrichtung benutzt werden.

Erfindungsgemäß wurde gefunden, dass es von Vorteil ist, wenn in dem Gehäuse eine Stützleiste für die Antriebskette vorgesehen ist. Diese Stützleiste unterstützt die Antriebskette im unteren Teil des Gehäuses. Sie sorgt auch dafür, dass die Antriebskette im Bereich der Zahnräder immer die gleiche Anlage hat, auch wenn sich die Kette beispielsweise durch Dehnung im unteren Bereich durchsenkt hat bzw. wenn die Kette durchhängt.

Im oberen Teil des Gehäuses ist ein Niederhalter für die Antriebskette vorgesehen. Auch dieser Niederhalter sorgt für eine ordnungsgemäße Führung der Antriebskette über das bzw. die Zahnräder.

Niederhalter und Stützleiste sind entsprechend einer vorteilhaften Variante der Erfindung in dem Gehäuse mittels einer Clipverbindung befestigt. Dies ermöglicht ein schnelles Montieren dieser Maschinenelemente und gleichzeitig auch bei einem notwendigen Austausch aufgrund des Verschleißes ein recht zügiges Wechseln.

Die Erfindung wird nachfolgend anhand von Ausführungsbeispielen und Zeichnungen weiter beschrieben. Es zeigt:
- Fig. 1: einen Schnitt durch eine in einem Gehäuse gelagerte Antriebswelle nach der Erfindung;
- Fig. 2: Schnitt durch eine weitere Ausführungsform der Erfindung und
- Fig. 3: Vorderansicht eines Details der Ausführungsform nach Fig. 2.

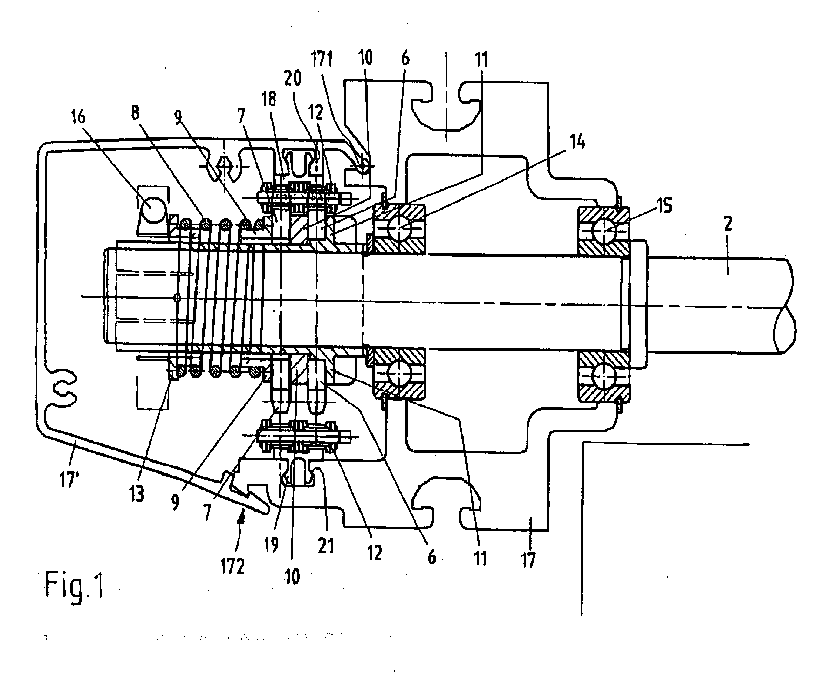

Die Fig. 1 zeigt einen Schnitt durch eine in einem Gehäuse 17 gelagerte Antriebswelle 2. Die Antriebswelle 2 ist dabei in Kugellagern 14 und 15 gelagert. Auf der rechten Seite der Darstellung ist die Antriebswelle 2 abgeschnitten dargestellt, da die dort angeordneten Maschinenelemente für die Erfindung nicht wesentlich sind, so dass dieser Teil nicht näher erläutert wird. Auf dieser Seite ist zum Beispiel die Antriebsrolle angeordnet. In dem Gehäuse 17 ist die Antriebswelle 2 zweifach gelagert. Links neben dem Kugellager 14 befindet sich die Kupplung 11. Die Kupplung 11 ist dabei in Art einer Hülse über den linksseitigen Stumpf der Antriebswelle 2 gezogen und besitzt rechts zum Lager 14 hin eine Kupplungsscheibe. Auf der Hülse der Kupplung sind drehbar die Zahnräder 6 und 7 angeordnet.

Die Zahnräder 6 und 7 werden dabei von einem Zwischenring 10 in einem gleichmäßigen Abstand gehalten. Gleichzeitig besitzt der Zwischenring 10 zwei plane Flächen, wovon eine jeweils zum Zahnrad 6 und die andere zum Zahnrad 7 hinweist, die gleichzeitig die Reibungskraft beziehungsweise das Antriebsmoment von den Zahnrädern 6, 7 auf die Kupplung übertragen. Links neben dem Zahnrad 7 ist eine Andruckhülse 9 angeordnet, die von der Feder 8 gegen das Zahnrad 7 gedrückt wird. Vom Zahnrad 7 wird die Kraft dann weiter auf den Zwischenring 10 und von diesem auf das Zahnrad 6 und von diesem wiederum auf die Kupplungsscheibe 11 übertragen. Durch diese erfindungsgemäße Anordnung entstehen insgesamt vier Reibflächen zwischen Kupplung 11, Zahnrad 6, Zwischenring 10, Zahnrad 7 und Andruckhülse 9.

Die Feder 8 ist in einem Federlager 13 gelagert, welches gewährleistet, dass die Kraft der Feder jeweils in Richtung der Kupplung 11 wirken kann. Dazu befindet sich vorteilhafterweise ein Befestigungselement 16 auf der Antriebswelle 2, welches sicherstellt, dass die Feder 8 das Federlager 13 nicht entgegen der eigentlich vorgesehenen Wirkkraft wegdrückt. Über die Zahnräder 6 und 7 läuft im oberen Bereich eine Antriebskette 12, die mit einem in der Fig. 1 nicht dargestellten Antriebsmotor zusammenwirkt. Selbstverständlich ist es auch möglich, die Antriebskette 12 als zweiteilige aus zwei Einzelketten erhaltene Kette auszuführen. Die Ausführung mit einer Doppelglied-Kette beziehungsweise Duplex-Kette führt jedoch dazu, dass bestimmte Spitzen der Belastung, die beim Anfahr- beziehungsweise Blockierungsvorgang auf der Transportbahn entstehen können, besser ausgeglichen werden können. Die vier Reibflächen stellen außerdem die Möglichkeit zur Verfügung, die Andruckkraft der Feder um 50 % reduzieren zu können und trotzdem das gleiche Antriebsmoment zu übertragen.

Die Antriebswelle 2 ist in einem Gehäuse 17 gelagert. Das Gehäuse 17 ist zweiteilig mit einem Gehäusedeckel 17' ausgeführt. In dem Gehäuse 17 sind dabei die Kugellager 14 und 15 angeordnet. Auf der rechten Seite der Darstellung gemäß der Fig. 1 ist ersichtlich, dass das Gehäuse von einem Gehäusedeckel 17' verschlossen wird. Vorzugsweise ist dieser Deckel im oberen Teil an dem Gehäuse an einer ersten Clipsverbindung 171 drehbar gelagert und im unteren Teil mit einer Klemm- bzw. Clipverbindung 172 befestigt.

Aus der Darstellung des Gehäuses wird ersichtlich, dass dieses Gehäuse auch zur Lagerung anderer Maschinenteile, als nach der Erfindung vorgesehen, einsetzbar ist. Dazu sind insbesondere im Inneren des Gehäuses 17 bzw. am Gehäusedeckel 17' entsprechende Befestigungsstellen vorgesehen. Im unteren Bereich des Gehäuses 17 ist eine Stützleiste 19 in das Gehäuse 17 eingeclipst. Diese Stützleiste 19 ist dabei mittels der Clipverbindung 21 in dem unteren Teil des Gehäuses 17 befestigt. Die Stützleiste 19 unterstützt dabei die Kette und sorgt für eine ordnungsgemäße Führung der Antriebskette 12 über die Zahnräder 6 und 7. Im oberen Bereich des Gehäusedeckels 17' ist ein Niederhalter 18 vorgesehen, der an dem Gehäusedeckel 17' befestigt ist. Nach der Ausführung gemäß der Fig. 1 ist dieser Niederhalter 18 ebenfalls mittels einer Clipverbindung 20 an dem Gehäusedeckel 17' befestigt. Der Niederhalter 18 sorgt ebenfalls für eine ordnungsgemäße Führung der Antriebskette 12 über die Zahnräder 6 und 7.

Aus der Schnittdarstellung des Gehäuses 17 bzw. des Gehäusedeckels 17'ist ersichtlich, dass diese Bauelmente sehr gut aus extrudierten Aluminiumprofilen herstellbar sind. Insbesondere die Profilausführung der Clip- und Befestigungsverbindungen sind mittels derartiger Profile in einem Strang-Pressverfahren bzw. beim Extrudieren sehr gut und günstig herstellbar.

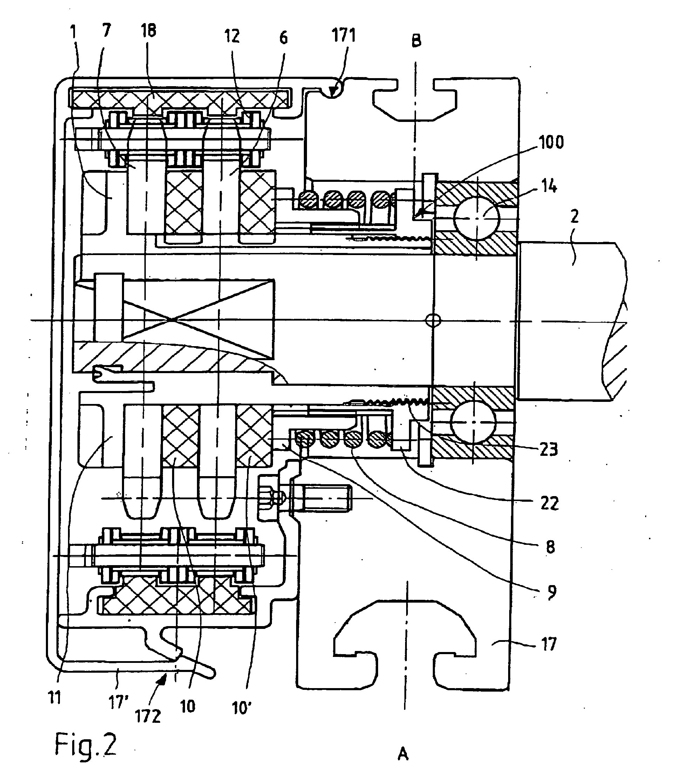

Die Fig. 2 zeigt einen Schnitt durch eine weitere Ausführungsform der Erfindung. Diese Ausführungsform zeichnet sich durch eine sehr kompakte Bauweise des Gehäuses, bestehend aus den Gehäuseteilen 17 und 17' aus. Dies wird erreicht, durch die besondere Art und Weise der Anordnung und Lagerung der Antriebswelle 2 in dem Gehäuse 17 sowie die besondere Art der Anordnung der Kraftübertragungselemente. Die Antriebswelle 2 ist dabei lediglich mit einem Kugellager 14 gelagert. Auf der Welle ist die Kupplung 11 angeordnet, die, in der Ansicht gesehen von links, auf das Zahnrad 7 einwirkt. Zwischen dem Zahnrad 7 und dem Zahnrad 6 ist ein Zwischenring 10 angeordnet. Ein weiterer Zwischenring 10' befindet sich zwischen der Andruckhülse 9 und dem Zahnrad 6. Die Andruckhülse 9 wird, wie bereits in der Ausführungsform nach der Fig. 1, von einer Feder 8 gegen den Zwischenring 10' und das Zahnrad 6 gedrückt. Die Kupplung 11 wird aufgrund des Druckes dieser Feder ebenfalls gegen das Zahnrad 7 gedrückt. Eine Verstelleinrichtung 100 ist als Hülse 22 mittels eines Gewindes 23 von rechts in der Ansicht gesehen auf die Kupplung 11 aufgeschraubt. Durch das Aufschrauben der Hülse 22 läßt sich die Andruckkraft der Feder 8 und damit die Andruckkraft der Kupplung 11 und der Zwischenringe 10 beziehungsweise 10' auf die Zahnräder 6 und 7 verändern. Dreht man die Hülse 22 relativ weit auf die Kupplung 11 auf, so wird die Andruckkraft der Feder 8 erhöht. Schraubt man die Hülse 22 zurück, verringert sich die Andruckkraft der Feder. Damit läßt sich die Friktions- beziehungsweise Reibungskraft, welche durch die Kupplung 11 inclusive der Zwischenringe 10 und 10' auf die Zahnräder 6 und 7 übertragen wird, beeinflussen, das heißt, verstärken oder verringern. Alle weiteren Bezugszeichen wurden bereits bei der Vorstellung der Fig. 1 beschrieben, so daß auf eine Wiederholung dieser Bezugszeichen verzichtet wird.

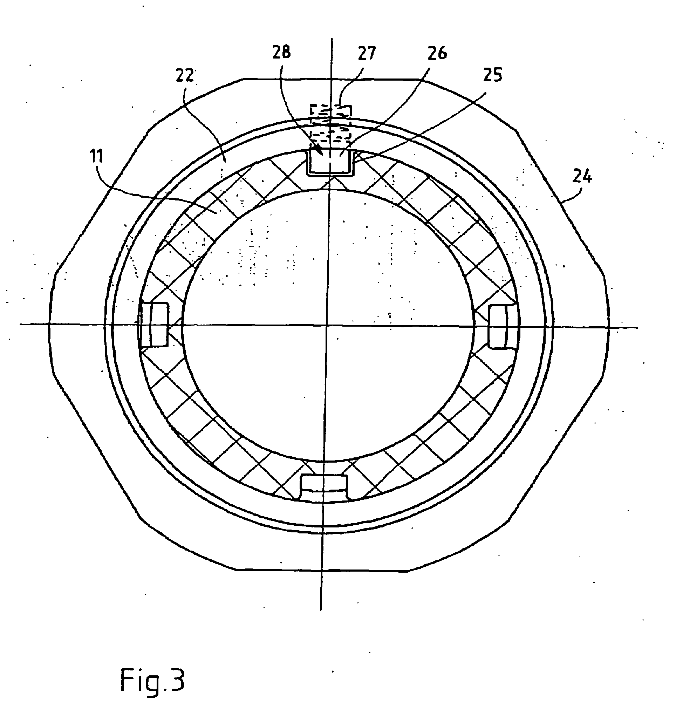

Die Fig. 3 zeigt die Vorderansicht eines Details der Ausführungsform der Fig. 2. Es handelt sich dabei um einen Schnitt an der Linie A, B. In dieser Ansicht ist die Ausführungsform der Hülse 22 mit einem im Wesentlichen als Sechskant 24 ausgeführten Flansch. Der Sechskant dient dabei zur Verdrehung der Hülse 22 auf der Kupplung 11. Zur Sicherung der einmal eingestellten Friktionskraft ist eine Sicherungseinrichtung vorgesehen, die aus einem Sicherungsbolzen 26 besteht, der in eine Nut 25 dann eingreift, wenn der Bolzen eine korrespondierende Stellung zur Nut 25 aufweist. Um die Sicherung im Wesentlichen automatisch zu gestalten, ist eine Sicherungsfeder 27 schematisch angedeutet, die den Sicherungsbolzen 26 selbsttätig in die Nut 25 bei entsprechender Stellung eindrückt. Diese Sicherungseinrichtung kann selbstverständlich, wie in der Fig. 3 angedeutet, an mehreren Stellen zwischen Kupplung 11 und Hülse 22 vorgesehen sein. Es ist jedoch auch ausreichend, wenn lediglich eine einzige Sicherungseinrichtung vorgesehen ist. Die Sicherungseinrichtung ist dabei nicht auf einen in eine Nut eingreifenden Bolzen beschränkt. Vielmehr kann die Sicherungseinrichtung auch eine normale Nut- und Federverbindung sein, bei der die Feder dann in die Nut eingreift, wenn die Sicherungsstellung erreicht ist. Die Verstelleinrichtung ist dadurch in ihrer Friktionskraft gesichert. Sie kann jederzeit jedoch nachjustiert beziehungsweise nachgestellt werden, wenn beispielsweise die Reibflächen an den Zahnrädern 6 und 7 beziehungsweise an den Zwischenringen 10 und 10' beziehungsweise an der Kupplung 11 abgenutzt sind.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Transportbahn, insbesondere Friktionsrollenbahn mit wenigstens einer das Gut antreibenden Antriebsrolle , wobei die Antriebsrolle von einer Antriebswelle (2) getrieben wird und die Antriebswelle (2) einen Kettentrieb aufweist, wobei die die Antriebsrolle antreibende Antriebswelle (2) zwei Zahnräder (6, 7) trägt, **dadurch gekennzeichnet, dass** beide Zahnräder (6, 7) unabhängig voneinander drehbar auf der Antriebswelle (2) angeordnet sind und die Zahnräder mit wenigstens einer von einem Antrieb angetriebenen Antriebskette (12) zusammenwirken.

2. Transportbahn nach Anspruch 1, **dadurch gekennzeichnet, dass** die Antriebskette (12) als Doppelglied-Kette ausgebildet ist und/oder jedem Zahnrad (6, 7) eine eigene Antriebskette (12) zugeordnet ist.

3. Transportbahn nach einem oder beiden der vorhergehenden Ansprüche, **dadurch gekennzeichnet, dass** die Antriebswelle (2) wenigstens eine Feder (8) aufweist, deren Federkraft die Zahnräder (6, 7) gegen eine an der Antriebswelle (2) ausgebildete Kupplung (11) drückt.

4. Transportbahn nach einem oder mehreren der vorhergehenden Ansprüche, **dadurch gekennzeichnet, dass** ein Zwischenring (10) vorgesehen ist, der zwischen den beiden Zahnrädern (6, 7) angeordnet ist und/oder der Zwischenring (10) verdrehbar zu dem Zahnrad (6, 7) ist und/oder eine Andruckhülse (9) vorgesehen ist, die die Kraft der Feder (8) auf die Zahnräder (6, 7) und die Kupplung (11) überträgt und/oder zwischen Andruckhülse (9) und einem der Zahnräder (6, 7) ein weiterer Zwischenring (10') vorgesehen ist.

5. Transportbahn nach einem oder mehreren der vorhergehenden Ansprüche, **dadurch gekennzeichnet, dass** die Kupplung (11) als Kupplungsscheibe ausgebildet ist und das über die Zahnräder (6, 7) eingeprägte Drehmoment auf die Antriebswelle (2) überträgt und/oder die Kupplung (11) an der zum Zahnrad (6) weisenden Seite mit einer reibungserhöhenden Beschichtung versehen ist und/oder wenigstens eines der Zahnräder (6, 7) an der zur Kupplung (11) und/oder zum jeweils anderen Zahnrad weisenden Seite mit einer reibungserhöhenden Beschichtung versehen ist und/oder zumindest ein Teil der zueinandergerichteten Flächen der Zahnräder (6, 7), der Andruckhülse (9), des Zwischenrings (10) und der Kupplung (11) mit reibungserhöhenden Beschichtungen versehen sind.

6. Transportbahn nach einem oder mehreren der vorhergehenden Ansprüche, **dadurch gekennzeichnet, daß** eine Verstelleinrichtung (100) vorgesehen ist, mittels derer die Friktionskraft, durch die die Kupplung (11) an die Zahnräder (6, 7) bzw. Zwischenringe (10, 10') gedrückt wird, veränderbar bzw. einstellbar ist.

7. Transportbahn nach einem oder mehreren der vorhergehenden Ansprüche, **dadurch gekennzeichnet, dass** als Verstelleinrichtung (100) ein Federlager (13) vorgesehen ist, das vorzugsweise an der von der Kupplung (11) abgewandten Seite der Antriebswelle (2) angeordnet ist.

8. Transportbahn nach einem oder mehreren der vorhergehenden Ansprüche, **dadurch gekennzeichnet, dass** die Position des Federlagers (13) auf der Antriebswelle (2) veränderbar ist.

9. Transportbahn nach einem oder mehreren der vorhergehenden Ansprüche, **dadurch gekennzeichnet, dass** als Feder (8) eine auf Druck beanspruchbare Feder vorgesehen ist und/oder als Feder (8) eine auf Zug beanspruchbare Feder vorgesehen ist.

10. Transportbahn nach einem oder mehreren der vorhergehenden Ansprüche, **dadurch gekennzeichnet, dass** die Antriebswelle (2) entweder in Kugellagern (14, 15) beidseitig oder in nur einem Kugellager (14) gelagert ist, die Kugellager (14, 15) in einem Gehäuse (17) angeordnet sind und/oder das Gehäuse (17) einen abnehmbaren Gehäusedeckel (17') aufweist und/oder das Gehäuse (17) und/oder der Gehäusedeckel (17') aus extrudierten Profilen, insbesondere Aluminium-Profilen, erhalten worden ist und/oder sich das Gehäuse (17) durch eine kompakte Bauweise auszeichnet.

11. Transportbahn nach einem oder mehreren der vorhergehenden Ansprüche, **dadurch gekennzeichnet, dass** das Gehäuse (17) bevorzugt zweiteilig mit einem Gehäusedeckel (17') ausgebildet ist und die beiden Gehäuseteile mittels Clipsverbindungen (171, 172) miteinander verbunden sind und/oder eine der Clipsverbindungen bevorzugt an der Position (171) drehbar gelagert ist.

12. Transportbahn nach einem oder mehreren der vorhergehenden Ansprüche, **dadurch gekennzeichnet, dass** die Verstelleinrichtung (100) als Hülse (22) ausgebildet ist, die auf ein an der Kupplung (11) vorgesehenes Gewinde (23) zur Veränderung der Friktion aufschraubbar ist und/oder die Hülse (22) außen einen Sechskant (24) aufweist, der für die Verstellung bzw. zum Verdrehen der Hülse (22) zur Veränderung der Vorspannung dient.

13. Transportbahn nach einem oder mehreren der vorhergehenden Ansprüche, **dadurch gekennzeichnet, dass** die Anordnung der Elemente in der Reihenfolge Andruckhülse (9), Zahnrad (6, 7), Antriebswelle (2) erfolgt und/oder die Anordnung der Kraftübertragungselemente von dem der Antriebswelle (2) abgewandten Ende aus gesehen in der Reihenfolge Befestigungselement (16), Federlager (13), Feder (8), Andruckhülse (9), Zahnrad (6 oder 7), Zwischenring (10), Zahnrad (6, 7) und Kupplung (11) vorgesehen ist.

14. Transportbahn nach einem oder mehreren der vorhergehenden Ansprüche, **dadurch gekennzeichnet, dass** die Anordnung der Elemente in der Reihenfolge Zahnrad (6, 7), Andruckhülse (9), Antriebswelle (2) erfolgt und/oder die Anordnung der Kraftübertragungselemente von dem der Antriebswelle (2) abgewandten Ende aus gesehen in der Reihenfolge Kupplung (11), Zahnrad (6, 7), Zwischenring (10), Zahnrad (6, 7), Zwischenring (10'), Andruckhülse (9), Feder (8) und Hülse (22) als Verstelleinrichtung (100) zur Erreichung einer kompakten Bauweise vorgesehen ist.

15. Transportbahn nach einem oder mehreren der vorhergehenden Ansprüche, **dadurch gekennzeichnet, dass** zwischen Hülse (22) und Kupplung (11) eine Sicherungseinrichtung (28) vorgesehen ist, mittels derer die einmal eingestellte Vorspannung festlegbar ist und/oder eine Sicherungseinrichtung (28) als Nut- und Federverbindung mit einer in die Nut (25) eingreifenden Flachfeder bzw. einem Sicherungsbolzen (26) ausgebildet ist und/oder die Sicherungsfeder bzw. der Sicherungsbolzen (26) selbst federgelagert ist, derart, daß sie bei korrespondierender Stellung von Nut (25) und Sicherungsbolzen (26) selbständig in die Nut (25) eingreift.

16. Transportbahn nach einem oder mehreren der vorhergehenden Ansprüche **dadurch gekennzeichnet, dass** eine Antriebswelle (2) für den Antrieb einer Sektion bzw. eines Abschnitts der Transportbahn vorgesehen ist und/oder die Antriebskette (12) mehrere Antriebswellen (2) gleichzeitig antreibt.

17. Transportbahn nach einem oder mehreren der vorhergehenden Ansprüche, **dadurch gekennzeichnet, dass** ein Befestigungselement (16) für das Federlager (13) auf der Antriebswelle (2) vorgesehen ist und/oder das Befestigungselement (16) als Spannring ausgebildet ist, der vorzugsweise auf der Antriebswelle (2) verstellbar angeordnet ist.

18. Transportbahn nach einem oder mehreren der vorhergehenden Ansprüche, **dadurch gekennzeichnet, dass** in dem Gehäuse (17) eine Stützleiste (19) für die Antriebskette (12) vorgesehen ist und/oder in dem Gehäuse (17) ein Niederhalter (18) für die Antriebskette (12) vorgesehen ist und/oder das Gehäuse (17) eine Clipverbindung (20, 21) für das Befestigen der Stützleiste (19) bzw. den Niederhalter (18) aufweist.

## Claims

1. Conveyor line, in particular friction roller conveyor with at least one driving roller driving the material, wherein the driving roller is driven by a drive shaft (2), and the drive shaft (2) has a chain drive, wherein the drive shaft (2) driving the driving roller has two toothed wheels (6, 7), **characterised in that** both toothed wheels (6, 7) are arranged on the drive shaft (2) independently of each other rotatably, and the toothed wheels interact at least with one driving chain (12) driven by a drive.

2. Conveyor line according to claim 1, **characterised in that** the driving chain (12) is designed as double member chain, and/or each toothed wheel (6, 7) is assigned its own driving chain (12).

3. Conveyor line according to one or both of the preceding claims, **characterised in that** the drive shaft (2) has at least one spring (8) the spring power of which presses the toothed wheels (6, 7) against a coupling (11) formed at the drive shaft (2).

4. Conveyor line according to one or more of the preceding claims, **characterised in that** an intermediate ring (10) is provided which is arranged between the two toothed wheels (6, 7), and/or the intermediate ring (10) can be turned in relation to the toothed wheel (6, 7), and/or a pressure sleeve (9) is provided which transmits the power of the spring (8) to the toothed wheels (6, 7) and the coupling (11), and/or between the pressure sleeve (9) and one of the toothed wheels (6, 7) another intermediate ring (10') is provided.

5. Conveyor line according to one or more of the preceding claims, **characterised in that** the coupling (11) is designed as clutch disk and transmits the turning moment impressed via the toothed wheels (6, 7) to the drive shaft (2), and/or the coupling (11) has a friction increasing coating on its side facing the toothed wheel (6), and/or at least one of the toothed wheels (6, 7) on the side facing the coupling (11) and/or the side facing the respective other toothed wheel is provided with a friction increasing coating, and/or at least a part of the surfaces of the toothed wheels (6, 7), of the pressure sleeve (9), of the intermediate ring (10) and of the coupling (11) facing each other are provided with coatings increasing the friction.

6. Conveyor line according to one or more of the preceding claims, **characterised in that** an adjustment device (100) is provided by means of which the friction power, through which the coupling (11) is pressed against the toothed wheels (6, 7) or the intermediate rings (10, 10'), can be altered or adjusted.

7. Conveyor line according to one or more of the preceding claims, **characterised in that** as adjustment device (100) a spring hanger (13) is provided which is arranged preferably at the side of the drive shaft (2) opposite the coupling (11).

8. Conveyor line according to one or more of the preceding claims, **characterised in that** the position of the spring hanger (13) on the drive shaft (2) can be changed.

9. Conveyor line according to one or more of the preceding claims, **characterised in that** as spring (8) a spring is provided which can be loaded by pressure, and/or as spring (8) a spring is provided which can be loaded by tension.

10. Conveyor line according to one or more of the preceding claims, **characterised in that** the drive shaft (2) is supported either in ball bearings (14, 15) on both sides or in only one ball bearing (14), the ball bearings (14, 15) are arranged in a housing (17), and/or the housing (17) has a removable housing lid (17'), and/or the housing (17) and/or the housing lid (17') has been made of extruded profiles, in particular aluminium profiles, and/or the housing (17) is marked by a compact construction.

11. Conveyor line according to one or more of the preceding claims, **characterised in that** the housing (17) is designed preferably in two parts with a housing lid (17'), and the two housing partsá are linked to each other by means of clip connections (171, 172), and/or one of the clip connections, preferably at the position (171,) is supported rotatably.

12. Conveyor line according to one or more of the preceding claims, **characterised in that** the adjustment device (100) is designed as sleeve (22), which can be screwed on a thread (23) provided at the coupling (11) for altering the friction, and/or the sleeve (22) has on its outside a hexagon (24) serving for adjustment or turning the sleeve (22) for altering the prestress.

13. Conveyor line according to one or more of the preceding claims, **characterised in that** the arrangement of the elements is done in the order pressure sleeve (9), toothed wheel (6, 7), drive shaft (2), and/or the arrangement of the power transmission elements, seen from the end opposite the drive shaft (2), á is provided in the order fastening element (16), spring hanger (13), spring (8), pressure sleeve (9), toothed wheel (6 or 7), intermediate ring (10), toothed wheel (6, 7) and coupling (11).

14. Conveyor line according to one or more of the preceding claims, **characterised in that** the arrangement of the elements is done in the order toothed wheel (6, 7), pressure sleeve (9), drive shaft (2), and/or the arrangement of the power transmission elements, seen from the end opposite the drive shaft (2), is provided in the orderá coupling (11), toothed wheel (6, 7), intermediate ring (10), toothed wheel (6, 7), intermediate ring (10'), pressure sleeve (9), spring (8) and sleeve (22) as adjustment device (100) in order to achieve a compact construction.

15. Conveyor line according to one or more of the preceding claims, **characterised in that** between sleeve (22) and coupling (11) a safety device (28) is provided by means of which the once set prestress can be determined, and/or a safety device (28) is designed as groove and tongue connection with a leaf spring or a safety bolt (26) engaging in the groove (25), and/or the safety spring or safety bolt (26) itself is supported by a spring hanger in such a way that it engages on its own in the groove (25) when the positions of the groove (25) and of the safety bolt (26) correspond.

16. Conveyor line according to one or more of the preceding claims, **characterised in that** a drive shaft (2) is provided for the drive of a section or a part of the conveyor line, and/or the driving chain (12) drives several drive shafts (2) at the same time.

17. Conveyor line according to one or more of the preceding claims, **characterised in that** a fastening element (16) for the spring hanger (13) is provided on the drive shaft (2), and/or the fastening element (16) is designed as straining ring arranged adjustably preferably on the drive shaft (2).

18. Conveyor line according to one or more of the preceding claims, **characterised in that** in the housing (17) a supporting rail (19) for the driving chain (12) is provided, and/or in the housing (17) a holding-down appliance (18) is provided for the driving chain (12), and/or the housing (17) has a clip connection (20, 21) for fastening the supporting rail (19) and the holding-down appliance (18), respectively.

## Revendications

1. Convoyeur, en particulier convoyeur à rouleaux à friction, comportant au moins un rouleau à friction entraînant les charges, le rouleau à friction comportant deux roues dentées (6,7) et étant entraîné par un arbre de commande (2) possédant un entraînement à chaîne, **caractérisé en ce que** les deux roues dentées (6, 7) sont situées en rotation libre sur l'arbre de commande (2) et interagissent avec au moins une chaîne d'entraînement (12).

2. Convoyeur selon la revendication 1, **caractérisé en ce que** la chaîne d'entraînement (12) est une chaîne à double maillons et/ou **en ce qu'**il y a deux chaînes, une pour chaque roue dentée (6, 7).

3. Convoyeur selon l'une ou selon les deux revendications précédentes, **caractérisé en ce que** l'arbre de commande (2) comporte au moins un ressort (8) dont la force pousse les roues dentées (6, 7) contre un embrayage (11) situé sur l'arbre de commande (2).

4. Convoyeur selon une ou plusieurs des revendications précédentes, **caractérisé en ce qu'**il existe un anneau d'espacement (10) entre les deux roues dentées (6, 7) et/ou **en ce que** l'anneau d'espacement (10) peut tourner indépendamment des roues dentées (6, 7) et/ou **en ce qu'**il existe un morceau de tube (9) transmettant la force du ressort (8) sur les roues dentées (6, 7) et sur l'embrayage (11) et/ou **en ce qu'**il existe un deuxième anneau d'espacement (10') entre le morceau de tube (9) et l'une des roues dentées (6, 7).

5. Convoyeur selon une ou plusieurs des revendications précédentes, **caractérisé en ce que** l'embrayage (11) est un disque d'embrayage et transmet le moment de rotation imposé par les roues dentées (6, 7) sur l'arbre de commande (2) et/ou **en ce que** la face de l'embrayage (11) proche d'une roue dentée (6, 7) possède un revêtement augmentant le frottement et/ou **en ce qu'**au moins une roue dentée (6, 7) possède un revêtement augmentant le frottement du côté de l'embrayage et/ou du côté de l'autre roue dentée et/ou **en ce qu'**au moins une partie des surfaces placées en vis-à-vis des roues dentées (6, 7), du tube (9), de l'anneau d'espacement (10) et de l'embrayage (11) est munie d'un revêtement augmentant le frottement.

6. Convoyeur selon une ou plusieurs des revendications précédentes, **caractérisé en ce qu'**un dispositif d'ajustement (100) est prévu pour modifier et ajuster la force poussant l'embrayage (11) contre les roues dentées (6, 7) et les anneaux d'espacement (10, 10').

7. Convoyeur selon une ou plusieurs des revendications précédentes, **caractérisé en ce qu'**un support de ressort (13) fonctionne comme dispositif d'ajustement (100) et est situé de préférence entre l'embrayage et l'extrémité de l'arbre de commande.

8. Convoyeur selon une ou plusieurs des revendications précédentes, **caractérisé en ce que** la position du support de ressort (13) sur l'arbre de commande (2) est modifiable.

9. Convoyeur selon une ou plusieurs des revendications précédentes, **caractérisé en ce que** le ressort (8) est un ressort de compression et/ou **en ce que** le ressort (8) est un ressort de traction.

10. Convoyeur selon une ou plusieurs des revendications précédentes, **caractérisé en ce que** l'arbre de commande (2) est maintenu sur deux côtés par des roulements à billes (14, 15) ou par un seul roulement à billes (14), **en ce que** le ou les roulement(s) à billes (14, 15) est(sont) situé(s) à l'intérieur d'un châssis (17) et/ou en ce que le châssis (17) possède un couvercle (17') amovible et/ou **en ce que** le châssis (17) et/ou le couvercle (17') sont/est formé(s) à partir de profilés extrudés, en particulier à partir de profilés en aluminium et/ou **en ce que** le châssis (17) se distingue par une forme de construction compacte.

11. Convoyeur selon une ou plusieurs des revendications précédentes, **caractérisé en ce que** le châssis (17) est de préférence fabriqué en deux parties et fermé par un couvercle (17'), les deux parties du châssis étant liées entre elles par des clips (171,172) et/ou **en ce qu'**un des clips est pivotable autour de sa position de fixation (171).

12. Convoyeur selon une ou plusieurs des revendications précédentes, **caractérisé en ce que** le dispositif d'ajustement (100) est un tube (22) qui peut être vissé sur un filet (23) situé au niveau de l'embrayage (11) et permettant d'ajuster le frottement et/ou **en ce que** le tube (22) possède un six pans extérieur (24) utilisable pour ajuster ou tourner le tube (22) et ainsi modifier la tension mécanique.

13. Convoyeur selon une ou plusieurs des revendications précédentes, **caractérisé en ce que** l'enchaînement des éléments suit la séquence suivante: tube (9), roue dentée (6, 7), arbre de commande (2) et/ou **en ce que** l'enchaînement des éléments nécessaires pour la transmission de force commence au niveau de l'extrémité de l'arbre de commande (2) avec: l'élément de fixation (16), le support de ressort (13), le ressort (8), le tube (9), la roue dentée (6 ou 7), l'anneau d'espacement (10), la roue dentée (6 ou 7) et l'embrayage (11).

14. Convoyeur selon une ou plusieurs des revendications précédentes, **caractérisé en ce que** l'enchaînement des éléments suit la séquence suivante: roue dentée (6 et le 7), tube (9), arbre de commande (2) et/ou **en ce que** l'enchaînement des éléments nécessaires à la transmission de force commence au niveau de l'extrémité de l'arbre de commande (2) avec: l'embrayage (11), la roue dentée (6, 7), l'anneau d'espacement (10), la roue dentée (6, 7), l'anneau d'espacement (10'), le tube (9), le ressort (8) et le tube (22) comme dispositif d'ajustement (100) afin d'obtenir une construction compacte.

15. Convoyeur selon une ou plusieurs des revendications précédentes, **caractérisé en ce qu'**un dispositif d'immobilisation (28) est prévu entre le tube (22) et l'embrayage (11) permettant de fixer la tension mécanique préalablement ajustée et/ou **en ce qu'**un dispositif d'immobilisation (28) fonctionnant selon le principe de tenon et mortaise et dont une tige d'immobilisation (26) ou un ressort plat est introduit dans la mortaise (25) et/ou **en ce que** le ressort d'immobilisation ou la tige d'immobilisation (26) sont eux-mêmes montés sur des ressorts de façon à ce que la tige d'immobilisation (26) rentre d'elle-même dans la mortaise (25) lorsque la position de celle-ci correspond à celle de la tige.

16. Convoyeur selon une ou plusieurs des revendications précédentes, **caractérisé en ce qu'**un arbre de commande (2) est prévu pour entraîner une section ou un secteur du convoyeur et/ou **en ce que** la chaîne d'entraînement (12) entraîne simultanément plusieurs arbres de commande (2).

17. Convoyeur selon une ou plusieurs des revendications précédentes, **caractérisé en ce qu'**il existe un élément de fixation (16) prévu pour le support (13) de ressort sur l'arbre de commande (2) et/ou **en ce que** l'élément de fixation (16) est un ressort en forme d'anneau qui peut être déplacé le long de l'arbre de commande (2).

18. Convoyeur selon une ou plusieurs des revendications précédentes, **caractérisé en ce qu'**il existe à l'intérieur du châssis (17) un profilé (19) prévu pour le support de la chaîne d'entraînement (12) et/ou **en ce qu'**il existe à l'intérieur du châssis (17) un profilé (18) appuyant sur la chaîne d'entraînement (12) et/ou **en ce que** le châssis (17) possède un moyen de connexion par clips (20,21) destiné à la fixation du profilé de support (19) et à celle du profilé d'appui (18).
